# EUROPEAN PATENT APPLICATION

(11) **EP 2 849 328 A1**
(43) Date of publication of application: **18.03.2015**
(21) Application number: 13392005.8
(22) Date of filing: 13.09.2013
(51) Int. Cl.: H02M 3/158, H02M 1/32

(54) **An apparatus and method for a boost converter with improved electrical overstress (EOS) tolerance**

(71) Applicant: Dialog Semiconductor GmbH, 73230 Kirchheim/Teck-Nabern (DE)
(72) Inventor: Yavuz, Kilic, Edinburgh, EH7 5NE (GB)
(74) Representative: Schuffenecker, Thierry

(57) **Abstract**

An apparatus and method for a boost power converter with improved electrical overstress (EOS) tolerance with respect to its output voltage is disclosed. A pulse width modulated (PWM) boost power converter comprises an electrical overstress (EOS) boost over-voltage comparator / switch network. The latter comprises a boost overvoltage comparator, a boost overvoltage comparator feedback network, and a boost overvoltage switch, short-circuiting the output to ground in case of overvoltage. The method for the boost converter with improved electrical overstress (EOS) tolerance defines an absolute maximum voltage condition, provides a voltage limit below the defined absolute maximum voltage condition, and initiates turn-on of the boost overvoltage switch according to the voltage limit.

## Description

### Technical Field

The disclosure relates generally to a power converter circuits, and more particularly, to a DC-to-DC boost power converter circuit device having improved electrical overstress (EOS) tolerance thereof.

### Background Art

DC-to-DC power converters are used to provide voltage conditions that are different than the voltage of a given input source. DC-to-DC power converters can provide an output voltage greater, equal, or lower than the input voltage. A boost converter (also known as a step-up converter) is a DC-to-DC power converter whose output voltage is greater than its input voltage. A buck converter (also known as a step-down converter) is a DC-to-DC power converter whose output voltage is lower than its input voltage. A buck-boost converter is a DC-to-DC power converter whose output voltage magnitude is either greater than or less than the input voltage magnitude. Boost, buck, and buck-boost converters are different classes of switched-mode power supply (SMPS) circuit topologies. In DC-to-DC power converters, it is important that the implementation have good power efficiency, ruggedness, low cost, small area, and high reliability.

To maintain proper operation and high reliability of the DC-to-DC power converter, the active and passive components must remain within the safe operating area (SOA). Given that the voltage or current conditions exceed the component's electrical safe operating area (E-SOA) or thermal safe operating area (T-SOA), latent or destructive failure can occur. Electrical overstress (EOS) can occur from electrical over-voltage (EOV), or electrical over-current (EOC). Electrical over-voltage (EOV) can occur when the voltage exceeds the absolute maximum voltage (V _{ABS MAX}) of the components within the circuit implementation, where absolute maximum voltage is defined as the maximum voltage allowed prior to electrical degradation. Electrical over-current (EOC) can occur when the current exceeds the absolute maximum current (I _{ABS MAX}) of the components within the circuit implementation, where absolute maximum current is defined as the maximum current allowed prior to electrical degradation. Electrical excursions outside of the electrical safe operating (E-SOA) can occur from transient switching, spiking, load transitions, and other sources. In power converters, voltage conditions that can exceed the native technology voltage leading to over-voltage and over-stress conditions. Electrical overstress (EOS) events also includes external events caused by electrostatic discharge (ESD), electromagnetic interference (EMI), latchup, and electromagnetic compatibility (EMC). ESD events can occur from external events on signal pins, or power pins. To achieve EOS robustness associated with ESD events, it is important to avoid over-voltage conditions. High current events can occur from external charge cables, or charged printed circuit boards (PCBs). Charged cables can lead to electrical overstress events in single components, or integrated circuits mounted on printed circuit boards.

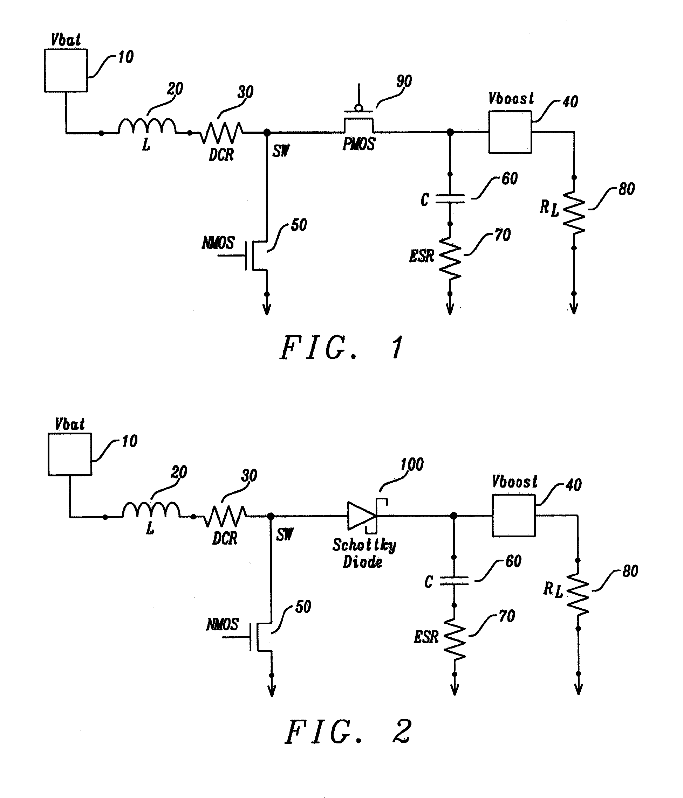

Switched-mode power supply (SMPS) topology for a boost converter comprises a DC power source, an inductor, at least two switches, a capacitor storage element, and a load element. The switch elements can be a semiconductor component which is a diode, bipolar junction transistor (BJT), or metal oxide semiconductor field effect transistor (MOSFET). The DC power source can be a battery, or other forms of power sources. A first switch is in a series configuration with the load that allows the transfer of power from the power source to the load. An example of a prior art implementation, a boost converter circuit topology is illustrated in FIG. 1. The boost converter consists of a battery power source of voltage Vbat 10, a series inductor L 20 a series resistor DCR 30, and a boost output signal Vboost 40. A "switch" is illustrated in FIG. 1 to the electrical ground where the switch is an n-channel metal oxide semiconductor (NMOS) field effect transistor device 50. The capacitor element can be represented by an ideal capacitor element 60 and its electrical series resistance (ESR) 70. A load element can be illustrated as a resistor element, R_{L} 80. A second "switch" is illustrated in FIG. 1 in series with the inductor and the load elements, where the switch is a p-channel metal oxide semiconductor (PMOS) field effect transistor device 90. In this illustrated implementation, by utilizing a PMOS field effect transistor device, the "switching" of the transistor can be controlled at the PMOS gate electrode.

As a second example of a prior art implementation, a boost converter circuit topology is illustrated in FIG. 2. The boost converter consists of a battery power source of voltage Vbat 10, a series inductor L 20, a series resistor DCR 30, and a boost output signal Vboost 40. A "switch" is illustrated in FIG. 1 to the electrical ground where the switch is an n-channel metal oxide semiconductor (NMOS) field effect transistor device 50. The capacitor element can be represented by an ideal capacitor element 60 and its electrical series resistance (ESR) 70. A load element can be illustrated as a resistor element, R_{L} 80. As illustrated in FIG. 2, the second "switch" in series with the inductor and the load elements, is a Schottky diode device 100 . In this illustrated implementation, by utilizing a Schottky diode device, the "switching" of the transfer device can only be controlled by the voltage differential of the Schottky diode from the battery to the load.

The key principle of a DC-to-DC boost converter is the inductor element in series with the battery source. The inductor stores energy, and transfers the energy to the load leading to an output voltage which is higher than the input voltage. For example, when the NMOS "switch" is closed, current flows from the battery, through the inductor 20, its associated series resistor DCR 30, and through the NMOS device 50. The battery power source current flows through the inductor, leading to energy stored in the inductor element. With the NMOS switch 50 closed, the impedance is reduced, leading to a high current transfer. For example, when the NMOS "switch" is opened, the current is reduced due to the higher impedance. Since the inductive element resists change in the current. As a result, the polarity will reverse, causing a higher voltage for current to flow through the p-channel MOS (PMOS) device 90 (as illustrated in FIG 1.) or Schottky diode 100 (as illustrated in FIG. 2) to charge the capacitor element 60.

The operation of the boost converter is a function of the cycling speed of the switch to ground. If the switch is cycled quickly, the inductor does not have enough time to fully discharge. Additionally, the load voltage will always be greater than the input voltage. The capacitor element 60 that is in parallel with the load element 80 will also be charged to the load voltage Vboost 40. When the NMOS switch 50 is closed, the capacitor element 60 provides the stored energy to the load to maintain the load voltage condition Vboost. Additionally, the p-channel MOS (PMOS) device 90 (as illustrated in FIG 1.) or Schottky diode 100 (as illustrated in FIG 2.) prevents the capacitor 60 from discharging through the NMOS device 50.

A boost power converter can operate in two modes of operation. These modes of operation are known as the continuous mode of operation, and the discontinuous mode of operation. The mode of operation is a function of the magnitude of the load on the boost power converter.

In the boost power converter continuous mode of operation, the current through the inductor never is reduced to a zero magnitude. This condition occurs for high impedance loads. A pulse width modulator (PWM) boost converter generates a higher voltage than the input supply battery. The PWM boost converter is in continuous conduction mode if the load is large in magnitude. During the "on-state" the NMOS switch 50 to ground is closed, leading to the input voltage appear across the inductor element (for the ideal inductor) for a given time period. During this time, the increase in current across the inductor is a function of the duty cycle, D, and commutation period, T. During the off-state, the NMOS switch 50 is open, and the inductor current flows through the resistor load 80.

In the boost power converter discontinuous mode of operation, the current through the inductor is reduced to a zero magnitude, and completely discharged before the end of the commutation cycle. A pulse width modulator (PWM) boost converter generates a higher voltage than the input supply battery. The PWM boost converter is in discontinuous conduction mode if the load is small in magnitude. This condition occurs in low impedance loads. In this case, the inductor current at the beginning of the cycle is zero. During the "on-state" the NMOS switch 50 to ground is closed, leading to the input voltage appear across the inductor element (for the ideal inductor) for a given time period, reaching a maximum current value. During this time, the increase in current across the inductor is a function of the duty cycle, D, and commutation period T. During the off-state, the NMOS switch 50 is open, and the inductor current is zero. In this case, the output voltage, Vboost 40 is a function of the duty cycle, D, the commutation time, T, the inital current lo, switching frequency, and the inductor magnitude, L.

In light loads, the boost converter could be allowed to operate in high impedance mode where the output is disconnected from the input supply by turning off the main NMOS transistor switch, and the synchronously rectifying switch in the case of a synchronously rectified boost converter.

In the case of a synchronously rectified boost converter, when the load magnitude is small, the converter operates in discontinuous mode of operation where the inductor current can be zero, and below zero (e.g. negative).

In the prior art; as illustrated in FIG. 1, and FIG 2., the boosted power converter has the disadvantage that it cannot discharge the output voltage Vboost if it rises significantly. Since the output voltage is not limited by the implementation, electrical overstress (EOS) can occur in the boosted power converter circuit elements, as well as the external load elements where the voltage can exceed the voltage absolute maximum (V _{ABS MAX}). Both the passive and active elements in the circuit are vulnerable to electrical overstress (EOS). The passive and active elements that may undergo electrical overstress can include the capacitor load 60, PMOS transistor 90, the Schottky diode 100, and the NMOS switch 50.

The electrical overstress (EOS) in the boost power converter active and passive devices can be a function of the nature of the load and application. In a boosted Class D driver application, the boost power converter can be connected to an external load that comprises of a Class D H-bridge and external speaker. Speakers are non-linear loads that have variable impedance in the frequency regime. The speaker impedance are non-linear in both magnitude and phase over the range of audio frequencies. A percentage of the current within the speaker can flow into the boost converter output capacitor element (through the high side of the Class D H-bridge device). In this case, the boost output voltage can increase above the voltage absolute maximum (V _{ABS MAX}) of the elements in the boost converter circuit leading to electrical overstress of the active and passive components. A solution to avoid electrical overstress (EOS) in this application is achieved by adding off-chip external clamping diodes to limit the boost voltage; this is a disadvantage due to the added area as well as extra component cost to the printed circuit board (PCB).

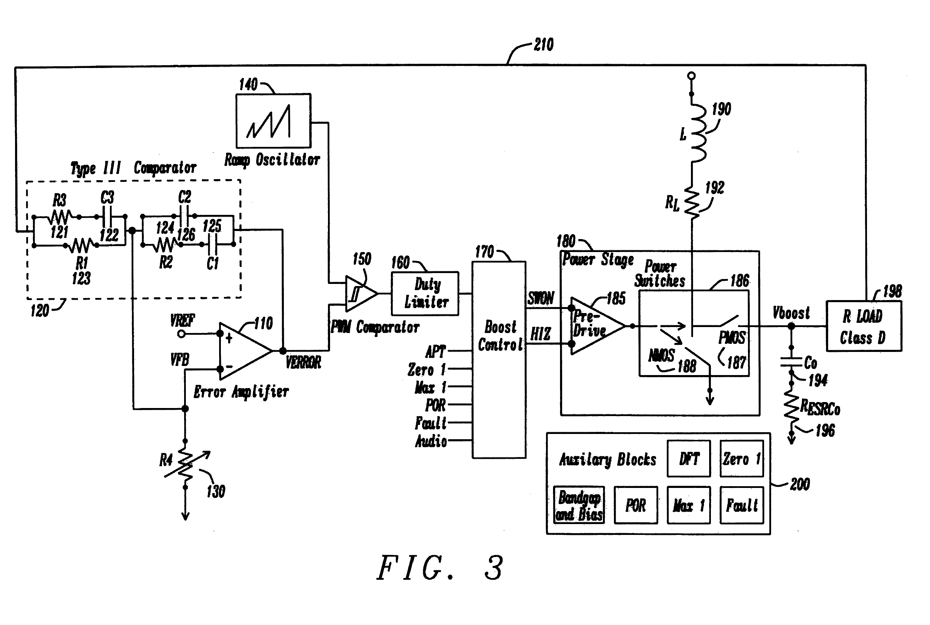

As illustrated in FIG. 3, an example of a prior art pulse width modulation (PWM) boost converter is shown. A PWM boost converter comprises of an error amplifier 110, a feedback RC network 120, a feedback variable resistor element 130, a ramp oscillator 140, a PWM comparator 150, a Duty cycle control 160, a boost control network 170, a power stage 180, an an Inductor L 190, a capacitor C 194, a Class D resistor load 198, auxiliary blocks 200, and a feedback signal line 210. The feedback RC network 120 comprises of a resistor R3 121, a capacitor C3 122, a resistor R1 123, a resistor R2 124, a capacitor C1 125 and capacitor C2 126. The RC network 120 is electrically connected to the variable resistor R4. Additionally, the feedback RC network is electrically connected to the negative input signal of the error amplifier 110, providing a feedback input voltage, V_{FB} . The positive input signal of the error amplifier 110 is electrically connected to a reference voltage, V_{REF}. The output of the error amplifier 110 and the ramp oscillator 140 provide a first and second signal to the PWM comparator 150. The output of the PWM comparator 150 is electrically connected to the Duty cycle control 160. The output of the Duty cycle control 160 is connected to the Boost control network 170. The Boost control network 170 contains the input functions APT, Zero I, Max I, POR, Fault, and Audio. The output of the Boost control network 170 consists of two output signal functions, switch on (SWON), and high impedance (HIZ). The signals SWON and HIZ are connected to the pre-drive network 185 of the Power stage 180 . The Power stage 180 contains both the pre-drive network 185, and power switch stage 186. The power switch stage 186 contains p-channel metal oxide semiconductor (PMOS) 187 and n-channel metal oxide semiconductor (NMOS) 188 transistors. The inductor L 190 is non-ideal which is represented as a series resistance resistor R_{L} 190. Additionally, the capacitor element C_{O} 194 contains non-ideal resistance represented as resistor R _{ESRCo} 196. The output of the Power stage is the output voltage, Vboost. The Vboost signal voltage is connected to the Class D R_{LOAD} 198, and feedback signal 210.

In the prior art apparatus as illustrated in FIG. 3, the Class D load can be speakers are non-linear load elements. In the boost PWM power converter, an external load that comprises of a Class D H-bridge and external speaker. Speakers are non-linear loads that have variable impedance in the frequency regime. The speaker impedance are non-linear in both magnitude and phase over the range of audio frequencies. A percentage of the current within the speaker can flow into the boost converter output capacitor element (through the high side of the Class D H-bridge device). If the external speaker charges the boost output capacitor 194 to voltage levels above the application voltage, as well as if the circuit function initiates a high impedance mode of operation, (e.g. disconnecting the boost output from the input supply), the boost voltage Vboost is not limited, leading to the boost voltage to exceed the voltage absolute maximum ( V _{ABS MAX}) levels of the components and system.

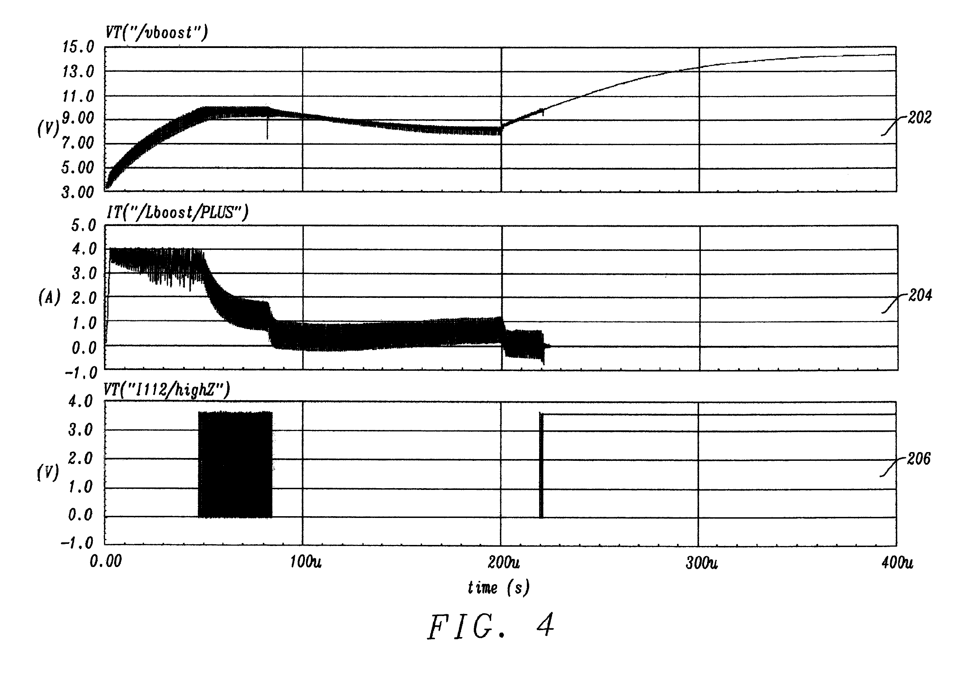

As illustrated in FIG. 4, a plot of the simulation results are shown of a prior art pulse width modulation (PWM) boost converter. The first simulation result is the boost voltage as a function of time 202. The second simulation result is the current as a function of time 204 through the inductor element 190. The third simulation is the voltage as a function of time 206 for the high impedance function HIZ when the boost converter is functioning. For an input voltage of 3.6 V, the desired boost voltage is 8.2 V, with an inductor current limit of 4 amperes. In the beginning of operation, the boost voltage begins to rise as current flows through the inductor element. As the 4 amperes of current flows through the inductor, the Vboost output voltage rises to 9.86V; a high impedance mode (highZ function providing a HIZ signal) is intiated that limits the output voltage Vboost. When the power converter achieves steady state, the highZ function, it turns off the PMOS and NMOS power switches . At this condition, the current through the inductor 190 approaches zero, and an external current flows into the boost capacitor 194. It is under this condition, as illustrated in the plot 202, that the boost voltage Vboost continues to rise above the absolute maximum voltage allowed value of the components and technology.

As shown, the prior art implementation of a DC-to-DC boost power converter can lead to electrical over-stress (EOS) of the passive and active elements. It is desirable to provide a solution to limit the electrical over-voltage (EOV) of the boost power converter.

In power converters, the issue of electrical overvoltage has been discussed. As discussed in published U.S. Patent 7,692,488 to Wong et al., describes a Class D amplifier with circuits that comprise of a PWM modulator, PWM control logic, an error amplifier, a first feedback loop on OUT (-), a second feedback loop on OUT (+) where the feedback signals are connected as input to the error amplifier. This avoids electrical overstress (EOS) of a speaker load. This solution added a second feedback loop.

In electric circuit applications, the issue of evaluating over-voltage has been discussed. As discussed in published U.S. Patent 7,630, 184 to Crain et al discloses a method and apparatus of an embedded over-limit voltage detector to detect, protect and record over-voltage.

In switching power supply controllers, the issue of addressing transient phenomena in the frequency domain has been discussed. As discussed in published U.S. Patent 7,965,068 to Tobin et al shows a circuit that shuffles a sequence of the phases in response to a load transients to prevent synchronization with a high frequency load transients. The network contains driver logic, an error amplifier, a resistor, a diode element, and an oscillator. This solution adds significant complexity and area to the boost power converter.

Alternative solutions to avoid electrical overstress is to place external diode elements on the printed circuit board, or in the system. The addition of "off-chip" external components to address electrical overstress (EOS) is a disadvantage due to the additional cost of the external components, weight of the external components, and the area on the printed circuit boards (PCB). For automotive, aerospace, and military applications, the area and weight of the off-chip elements can be a disadvantage. For handheld devices, portables, and laptop applications, the additional components impact size, area, and cost of the application.

It is desirable to provide a solution to address the prior art disadvantages of the boost power converter as well as other DC-to-DC converters, such as buck converters, and buck-boost converters to electrical overstress (EOS).

### Summary of the invention

A principal object of the present disclosure is to provide a circuit device with good resilience to electrical overstress (EOS).

Another further object of the present disclosure is to provide a circuit device with good power efficiency.

The above and other objects are achieved by a PWM boost power converter with improved electrical overstress (EOS) tolerance. The PWM boost converter device comprises an error amplifier, a feedback RC network, a feedback variable resistor element, a ramp oscillator, a PWM comparator, a Duty cycle control, a boost control network , a power stage, an inductor load to a power source , a capacitor C, a Class D load represented as a resistor load, auxiliary blocks, a feedback signal line, and an on-chip electrical overstress (EOS) feedback line boost over-voltage comparator / switch network .

As such, a novel boost power converter device with an improved electrical overstress (EOS) tolerance combining good voltage regulation, and good resiliency to EOS, ESD, EMI, EMC, and noise without an external off-chip solution is desired. Other advantages will be recognized by those of ordinary skill in the art.

### Description of the drawings

The present disclosure and the corresponding advantages and features provided thereby will be best understood and appreciated upon review of the following detailed description of the disclosure, taken in conjunction with the following drawings, where like numerals represent like elements, in which:

FIG. 1 is a circuit schematic diagram illustrating a prior art embodiment of a boost converter with a p-channel MOS (PMOS) field effect switch;

FIG. 2 is a circuit schematic diagram illustrating a prior art embodiment of a boost converter with a Schottky diode switch;

FIG. 3 is a circuit schematic illustrating a prior art embodiment of a pulse width modulation (PWM) boost power converter;

FIG. 4 is a plot of current and voltage characteristics of the prior art PWM boost power converter of FIG.3 highlighting the boost voltage, inductor current, and high Z function voltage as a function of time;

FIG. 5 is a circuit schematic diagram illustrating a pulse width modulation (PWM) boost power converter with a electrical overstress (EOS) feedback line boost over-voltage comparator / switch network according to the embodiment of the disclosure;

FIG. 6 is a plot of current and voltage characteristics of the disclosed embodiment of the PWM boost power converter with a electrical overstress (EOS) feedback line boost over-voltage comparator / switch network of FIG.5 highlighting the boost voltage, inductor current, and high Z function voltage as a function of time; and

FIG. 7 is a method for providing improved electrical overstress tolerance using a PWM boost power converter with a electrical overstress (EOS) feedback line boost over-voltage comparator / switch network.

### Detailed description

FIG. 1 is a circuit schematic diagram illustrating a prior art embodiment of a boost converter with a p-channel MOS (PMOS) field effect switch. A first switch to the ground node to activate the current flow into the inductor L 20 , where the switch is an n-channel metal oxide semiconductor (NMOS) field effect transistor device 50. The capacitor element can be represented by an ideal capacitor element 60 and its electrical series resistance (ESR) 70. A load element can be illustrated as a resistor element, R_{L} 80. A second "switch" is illustrated in FIG. 1 in series with the inductor and the load elements, where the switch is a p-channel metal oxide semiconductor (PMOS) field effect transistor device 90. In this illustrated implementation, by utilizing a PMOS field effect transistor device, the "switching" of the transistor can be controlled at the PMOS gate electrode. In this prior art embodiment, the passive capacitor element 60 and active PMOS switch 90 can undergo electrical overstress (EOS) given the output voltage Vboost exceeds the absolute maximum voltage of the devices (maximum allowed voltage for the given technology). Electrical overstress of the capacitor element 60 can lead to dielectric breakdown of the dielectric contained within the capacitor element. Electrical overstress (EOS) of the capacitor element 60 can lead to partial breakdown and gate dielectric leakage. Electrical overstress of the PMOS switch 90 can lead to MOSFET gate dielectric overstress at the output node to gate electrode, gate induced drain leakage (GIDL), MOSFET GIDL walk-out, gate leakage, gate dielectric breakdown, and PBTI. Additionally, electrical overstress can occur in the NMOS switch 50. Electrical overstress of the NMOS switch 50 can lead to MOSFET gate dielectric overstress at the output node to gate electrode, gate induced drain leakage (GIDL), MOSFET GIDL walk-out, gate leakage, gate dielectric breakdown, and NBTI.

FIG. 2 is a circuit schematic diagram illustrating a prior art embodiment of a boost converter with a Schottky diode switch. The boost converter consists of a battery power source of voltage Vbat 10, a series inductor L 20, a series resistor DCR 30, and a boost output signal Vboost 40. A "switch" is illustrated in FIG. 1 to the electrical ground where the switch is an n-channel metal oxide semiconductor (NMOS) field effect transistor device 50. The capacitor element can be represented by an ideal capacitor element 60 and its electrical series resistance (ESR) 70. A load element can be illustrated as a resistor element, R_{L} 80. As illustrated in FIG. 2, the second "switch" in series with the inductor and the load elements, is a Schottky diode device 100. In this illustrated implementation, by utilizing a Schottky diode device, the "switching" of the transfer device can only be controlled by the voltage differential of the Schottky diode from the battery to the load.. In this prior art embodiment, the passive capacitor element 60 and active Schottky diode switch 100 can undergo electrical overstress (EOS) given the output voltage Vboost exceeds the absolute maximum voltage of the devices (maximum allowed voltage for the given technology). Schottky diode over-voltage or electrical overstress can lead to Schottky diode leakage when the voltage exceeds the Schottky diode safe operating area (SOA). Additionally, electrical overstress can occur in the NMOS switch 50 given electrical failure of the Schottky diode. Electrical overstress of the NMOS switch 50 can lead to MOSFET gate dielectric overstress at the output node to gate electrode, gate induced drain leakage (GIDL), MOSFET GIDL walk-out, gate leakage, gate dielectric breakdown, and NBTI.

FIG. 3 is a circuit schematic illustrating a prior art embodiment of a pulse width modulation (PWM) boost power converter. A PWM boost converter comprises of an error amplifier 110, a feedback RC network 120, a feedback variable resistor element 130, a ramp oscillator 140, a PWM comparator 150, a Duty cycle control 160, a boost control network 170, a power stage 180, an an inductor L 190, a capacitor C 194, a Class D resistor load 198, auxiliary blocks 200, and a feedback signal line 210. The feedback RC network 120 comprises of a resistor R3 121, a capacitor C3 122, a resistor R1 123, a resistor R2 124, a capacitor C1 125 and capacitor C2 126. The RC network 120 is electrically connected to the variable resistor R4. Additionally, the feedback RC network is electrically connected to the negative input signal of the error amplifier 110, providing a feedback input voltage, V_{FB} . The positive input signal of the error amplifier 110 is electrically connected to a reference voltage, V_{REF}. The output of the error amplifier 110 and the ramp oscillator 140 provide a first and second signal to the PWM comparator 150. The output of the PWM comparator 150 is electrically connected to the Duty cycle control 160. The output of the Duty cycle control 160 is connected to the Boost control network 170. The Boost control network 170 contains the input functions APT, Zero I, Max I, POR, Fault, and Audio. The output of the Boost control network 170 consists of two output signal functions, switch on (SWON), and high impedance (HIZ). The signals SWON and HIZ are connected to the pre-drive network 185 of the Power stage 180 . The Power stage 180 contains both the pre-drive network 185, and power switch stage 186. The power switch stage 186 contains p-channel metal oxide semiconductor (PMOS) 187 and n-channel metal oxide semiconductor (NMOS) 188 transistors. The inductor L 190 is non-ideal which is represented as a series resistance resistor R_{L} 190. Additionally, the capacitor element C_{O} 194 contains non-ideal resistance represented as resistor R _{ESRCo} 196. The output of the Power stage is the output voltage, Vboost. The Vboost signal voltage is connected to the Class D R_{LOAD} 198, and feedback signal 210. In the prior art apparatus as illustrated in FIG 3., the Class D load can be speakers are non-linear load elements. In the boost PWM power converter, an external load that comprises of a Class D H-bridge and external speaker. Speakers are non-linear loads that have variable impedance in the frequency regime. The speaker impedance are non-linear in both magnitude and phase over the range of audio frequencies. A percentage of the current within the speaker can flow into the boost converter output capacitor element (through the high side of the Class D H-bridge device). If the external speaker charges the boost output capacitor 194 to voltage levels above the application voltage, as well as if the circuit function initiates a high impedance mode of operation, (e.g. disconnecting the boost output from the input supply), the boost voltage Vboost is not limited, leading to the boost voltage to exceed the voltage absolute maximum ( V _{ABS MAX}) levels of the components and system.

FIG. 4 is a plot of current and voltage characteristics of the prior art PWM boost power converter of FIG.3 highlighting the boost voltage, inductor current, and high Z function voltage as a function of time. The first simulation result of the prior art boost power converter is the boost voltage as a function of time 202. The second simulation result is the current as a function of time 204 through the inductor element 190. The third simulation is the voltage as a function of time 206 for the high impedance function HIZ when the boost converter is functioning. For an input voltage of 3.6 V, the desired boost voltage is 8.2 V, with an inductor current limit of 4 amperes.
In the beginning of operation, the boost voltage begins to rise as current flows through the inductor element. As the 4 amperes of current flows through the inductor, the Vboost output voltage rises to 9.86V; a high impedance mode (highZ function providing a HIZ signal) is initiated that limits the output voltage Vboost. When the power converter achieves steady state, the highZ function, it turns off the PMOS and NMOS power switches . At this condition, the current through the inductor 190 approaches zero, and an external current flows into the boost capacitor 194. It is under this condition, as illustrated in the plot 202, that the boost voltage Vboost continues to rise above the absolute maximum voltage allowed value of the components and technology. In this conventional boost converter, the network does not have "self-discharge" capability to address this concern. Additionally, with the over-voltage condition in the element, power is wasted impacting the power efficiency of the boost power converter.

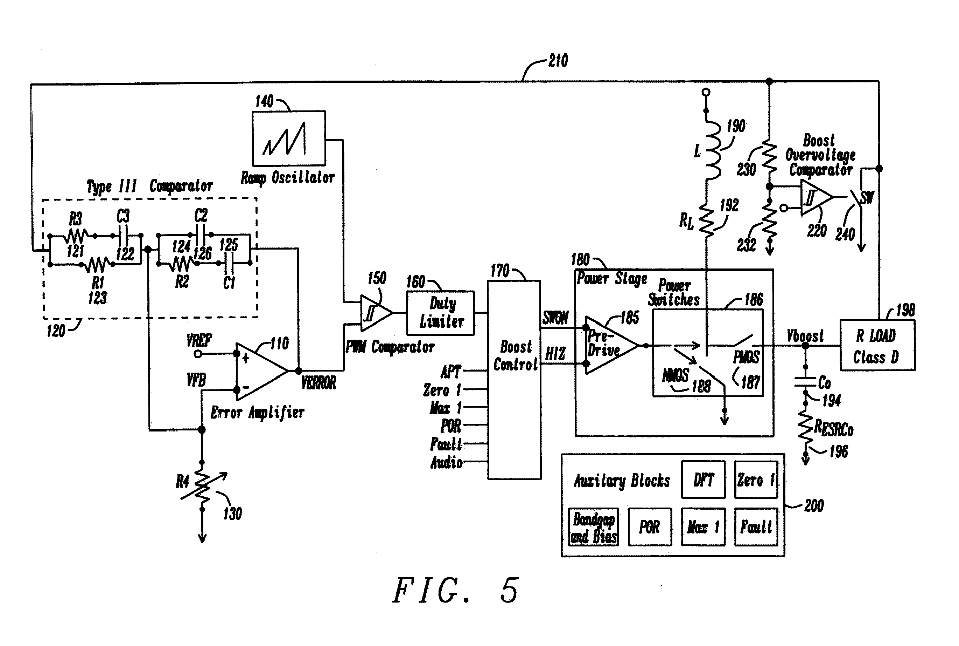

FIG. 5 is a circuit schematic diagram illustrating a pulse width modulation (PWM) boost power converter with an electrical overstress (EOS) feedback line boost over-voltage comparator / switch network according to the embodiment of the disclosure. A PWM boost converter with an electrical overstress (EOS) feedback line boost overvoltage comparator / switch network comprises of an error amplifier 110, a feedback RC network 120, a feedback variable resistor element 130, a ramp oscillator 140, a PWM comparator 150, a Duty cycle control 160, a boost control network 170, a power stage 180, an inductor L 190, a capacitor C 194, a Class D resistor load 198, auxiliary blocks 200, and a feedback signal line 210, boost overvoltage comparator 220, a boost overvoltage comparator resistor divider feedback network formed by resistor 230 and resistor 232, and a boost overvoltage switch 240. The feedback RC network 120 comprises of a resistor R3 121, a capacitor C3 122, a resistor R1 123, a resistor R2 124, a capacitor C1 125 and capacitor C2 126. The RC network 120 is electrically connected to the variable resistor R4. Additionally, the feedback RC network is electrically connected to the negative input signal of the error amplifier 110, providing a feedback input voltage, V_{FB} . The positive input signal of the error amplifier 110 is electrically connected to a reference voltage, V_{REF}. The output of the error amplifier 110 and the ramp oscillator 140 provide a first and second signal to the PWM comparator 150. The output of the PWM comparator 150 is electrically connected to the Duty cycle control 160. The output of the Duty cycle control 160 is connected to the Boost control network 170. The Boost control network 170 contains the input functions APT, Zero I, Max I, POR, Fault, and Audio. The output of the Boost control network 170 consists of two output signal functions, switch on (SWON), and high impedance (HIZ). The signals SWON and HIZ are connected to the pre-drive network 185 of the Power stage 180 . The Power stage 180 contains both the pre-drive network 185, and power switch stage 186. The power switch stage 186 contains p-channel metal oxide semiconductor (PMOS) 187 and n-channel metal oxide semiconductor (NMOS) 188 transistors. The inductor L 190 is non-ideal which is represented as a series resistance resistor R_{L} 190. Additionally, the capacitor element C_{O} 194 contains non-ideal resistance represented as resistor R _{ESRCo} 196. The output of the Power stage is the output voltage, Vboost. The Vboost signal voltage is connected to the Class D R_{LOAD} 198, and feedback signal 210. The boost overvoltage comparator 220 is electrically connected to the feedback line 210 providing electrical overvoltage protection to the output capacitor element 194, PMOS power switch 186, as well as overvoltage protection to the passive elements contained within the Type III comparator network 120, variable resistor 130, and error amplifier 110. The boost overvoltage comparator has an input from the boost overvoltage comparator resistor divider feedback network formed by resistor 230 and resistor 232. An overvoltage comparator has a second input connected to a reference voltage, V_{REF}. The output signal of the boost overvoltage comparator is electrically connected to the boost overvoltage switch 240. The boost overvoltage switch 240 can be a MOSFET, a bipolar junction transistor (BJT), or a silicon controlled rectifier (SCR) device. The boost electrical overstress switch can be any passive or active element that provides a means to discharge current from the Vboost output node. The electrical overstress (EOS) feedback line boost overvoltage comparator / switch network can be placed near the resistor load 198, near the capacitor 194 or at any location on the feedback line 210, between the Vboost output node, and the feedback RC network 120. An advantage of the "on-chip" EOS boost overvoltage comparator / switch network is it can be placed internal to the PWM boost converter which will provide the optimum EOS protection. In general, it can be understood that the circuit elements of the boost over-voltage comparator 220, resistor 230, resistor 232, and switch 240 can be placed internally to the semiconductor chip at different physical locations to provide the optimum performance of the electrical overstress (EOS) network from over-voltage.

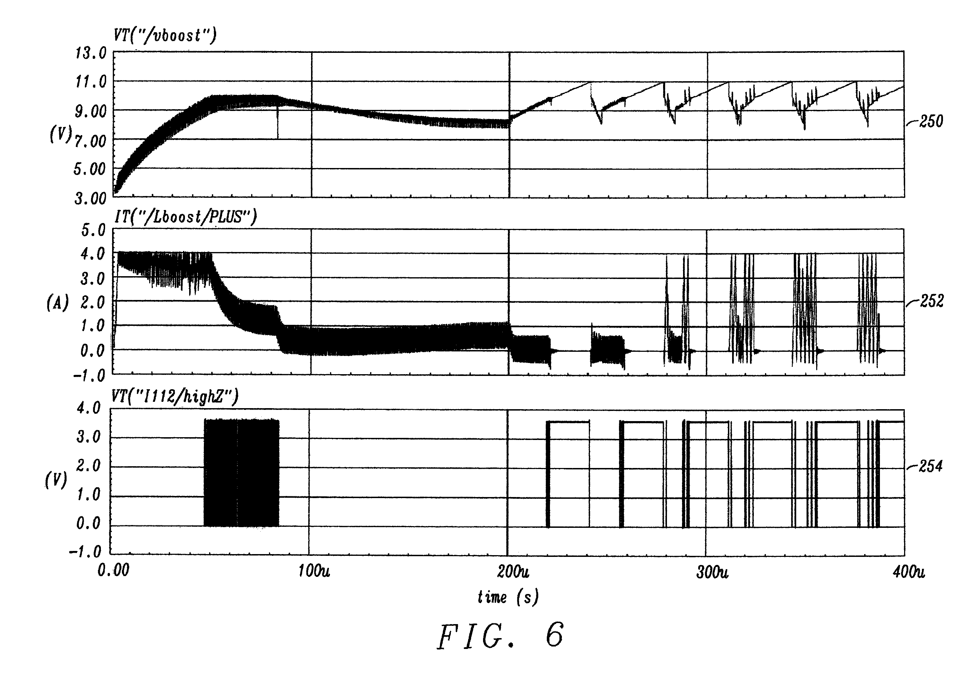

FIG. 6 is a plot of current and voltage characteristics of the disclosed embodiment of the PWM boost power converter with a electrical overstress (EOS) feedback line boost over-voltage comparator / switch network of FIG.5 highlighting the boost voltage, inductor current, and high Z function voltage as a function of time The first simulation result of the prior art boost power converter is the boost voltage as a function of time 250. The second simulation result is the current as a function of time 252 through the inductor element 190. The third simulation is the voltage as a function of time 254 for the high impedance function HIZ when the boost converter is functioning. For an input voltage of 3.6 V, the desired boost voltage is 8.2 V, with an inductor current limit of 4 amperes. In the beginning of operation, the boost voltage begins to rise as current flows through the inductor element. As the 4 amperes of current flows through the inductor, the Vboost output voltage rises to 9.86V; a high impedance mode (highZ function providing a HIZ signal) is initiated that limits the output voltage Vboost. When the power converter achieves steady state, the highZ function, it turns off the PMOS and NMOS power switches . At this condition, the current through the inductor 190 approaches zero, and an external current flows into the boost capacitor 194. In the first 200 micro-seconds, both the prior art and the present disclosure operate equivalently.

In the embodiment in this disclosure, after 200 □s, the boost output voltage begins to rise. At this time, the boost voltage Vboost exceeds the high Z voltage level, and the boost switches PMOS 186 and NMOS 187 are "off" and the inductor current approaches zero amperes. When the boost voltage exceeds the set maximum level of the disclosure, the internal overvoltage switch 240 turns into a conducting state, or "on" state, discharging the current to the return path (e.g. ground). When the boost voltage magnitude is below the level set for the high Z function, the boost converter circuit switches on. Re-initiating the boosting process. As can be seen in he boost voltage vs. time plot 250, the boost voltage does not continue to increase, but is defined according to a pre-set voltage level. The pre-set voltage level is defined so that the magnitude is below the absolute maximum voltage condition, V _{ABS MAX} magnitude. In this example of operation, the maximum voltage is set at 11 V, where the the absolute maximum voltage condition, V _{ABS MAX} magnitude condition for the technology is greater than 11 V.

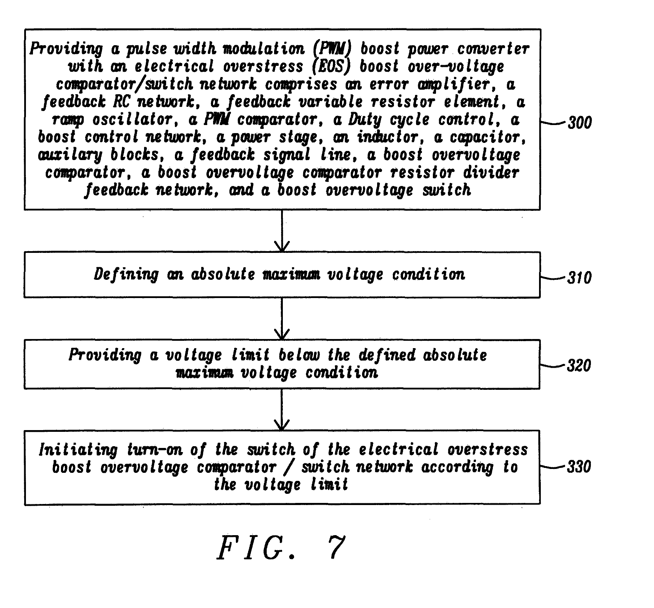

FIG. 7 is a method for providing improved electrical overstress tolerance using a PWM boost power converter with an electrical overstress (EOS) feedback line boost over-voltage comparator / switch network. The method for providing improved electrical overstress tolerance using a PWM boost power converter with an electrical overstress (EOS) boost over-voltage comparator / switch network , whose steps comprises (1) providing a pulse width modulation (PWM) boost power converter with an electrical overstress (EOS) boost over-voltage comparator / switch network according to the embodiment of the disclosure comprises of an error amplifier, a feedback RC network, a feedback variable resistor element, a ramp oscillator, a PWM comparator, a Duty cycle control, a boost control network , a power stage , an inductor, a capacitor, auxiliary blocks, and a feedback signal line, a boost overvoltage comparator, a boost overvoltage comparator resistor divider feedback network, and a boost overvoltage switch, 300, (2) defining an absolute maximum voltage condition 310, (3) providing a voltage limit below the defined absolute maximum voltage condition 320, and (4) initiating turn-on of the switch of the electrical overstress (EOS) boost over-voltage comparator / switch network according to the voltage limit 330.

## Claims

1. A boost power converter with improved electrical overstress (EOS) tolerance , comprising:
a boost power converter;
a voltage sense system configured to sense electrical over-voltage when a boost voltage exceeds a pre-set voltage level ,
a boost over-voltage comparator electrically connected to an output of said boost power converter, for comparing the pre-set voltage level relative to a reference voltage level;
a boost over-voltage comparator resistor divider feedback network connected to the input of said boost over-voltage comparator to evaluate the excess voltage level;
a boost over-voltage switch connected to the output of said boost over-voltage comparator which is initiated when the a boost voltage exceeds a pre-set voltage level; and
an output stage of a boost power converter with power switches which is disabled when the boost voltage exceeds a pre-set voltage level on said voltage sense system and re-initiated when the boost voltage level goes below a given voltage level, and when the boost over-voltage switch is not initiated.

2. The boost power converter of claim 1 wherein said boost overvoltage switch is in an "on" state according to a pre-defined voltage limit.

3. The boost power converter of claim 1 wherein the preset voltage level is less than or equal to an absolute maximum voltage limit V _{ABS MAX}.

4. The boost power converter of claim 1 further comprising a feedback signal line, and error amplifier.

5. The boost power converter of claim 4 wherein said boost overvoltage switch is connected to said feedback signal line.

6. A boost power converter with improved electrical overstress (EOS) tolerance, comprising:
an error amplifier providing an error amplifier output voltage;
a feedback RC network coupled to said error amplifier input providing a feedback voltage and coupled to said error amplifier output voltage;
a feedback variable resistor element coupled to an input of said error amplifier providing control of the feedback voltage;
a ramp oscillator providing a voltage output signal to compare to said error amplifier output voltage;
a PWM comparator whose inputs are electrically coupled to said error amplifier, and said ramp oscillator ;
a Duty cycle control electrically coupled to the output of said PWM comparator;
a boost control network electrically coupled to said Duty cycle control and boost control functions;
a power stage containing a pre-drive stage, and power switches electrically coupled to said boost control network providing an output current drive to said power switches;
an inductor coupled to said power stage and power supply providing an energy storage function for boosting the output voltage ;
a capacitor electrically coupled to the power stage and inductor providing an energy storage function for storing charge at the boost converter output;
a feedback signal line electrically connected to an output load and said feedback RC network providing a feedback signal for said error amplifier;
a boost over-voltage comparator electrically connected to an output load and said feedback signal line providing the function of comparing the pre-set voltage level relative to a reference voltage level ;
a boost over-voltage comparator resistor divider feedback network connected to the input of said boost over-voltage comparator to evaluate the excess voltage level; and
a boost overvoltage switch connected to the output of said boost over-voltage comparator which is initiated when the a boost voltage exceeds a pre-set voltage level .

7. The boost power converter device of claim 6 wherein said boost overvoltage switch is in an "on" state according to a pre-defined voltage limit.

8. The boost power converter device of claim 7 wherein the pre-defined voltage limit is less than or equal to an absolute maximum voltage limit V _{ABS MAX}.

9. A method of improved electrical overstress (EOS) tolerance , comprises the steps of:
providing a boost power converter;
providing a voltage sense system coupled to an output of said boost power converter, and comprising a boost overvoltage comparator, a boost over-voltage feedback network, and a switch,
defining a pre-set voltage limit in the boost over-voltage comparator;
sensing an electrical over-voltage state when the boost voltage exceeds a pre-set voltage level using the boost over-voltage feedback network;
providing an input to said boost over-voltage comparator;
determining the pre-set voltage level relative to a reference voltage level;
initiating a boost over-voltage switch connected to the output of said boost over-voltage comparator which is initiated when the sensed over-voltage condition exceeds a pre-set voltage level ; and
disabling the an output stage of said boost power converter with power switches when the sensed over-voltage condition exceeds a pre-set voltage level on said voltage sense system; and,
re-initiating said boost power converter power switches when the boost voltage level goes below a given voltage level, and when the boost over-voltage switch is not initiated.

10. A method for providing improved electrical overstress tolerance using a PWM boost power converter with an electrical overstress (EOS) boost over-voltage comparator / switch network comprises the steps of:
providing a pulse width modulation (PWM) boost power converter with an electrical overstress (EOS) boost over-voltage comparator / switch network comprising a boost power amplifier, a boost over-voltage comparator, a boost over-voltage comparator resistor divider feedback network, and a boost over-voltage switch;
defining an absolute maximum voltage condition;
providing a voltage limit below the defined absolute maximum voltage condition; and
initiating turn-on of the switch of the electrical overstress (EOS) boost over-voltage comparator / switch network according to the voltage limit.

11. The method of claim 10 further comprising said pulse width modulation (PWM) boost power converter with an error amplifier, a feedback RC network, a feedback variable resistor element, a ramp oscillator, a PWM comparator, a Duty cycle control, a boost control network , a power stage , an inductor, a capacitor, auxiliary blocks, and a feedback signal line.

12. A method for providing improved electrical overstress tolerance using a PWM boost power converter with an electrical overstress (EOS) boost over-voltage comparator / switch network, comprising the steps of:
providing a pulse width modulation (PWM) boost power converter with an electrical overstress (EOS) boost over-voltage comparator / switch network comprising a boost power converter, a boost overvoltage comparator, a boost overvoltage comparator feedback network, and a boost overvoltage switch;
defining an absolute maximum voltage condition;
providing a voltage limit below the defined absolute maximum voltage condition; and
initiating turn-on of the boost overvoltage switch according to the voltage limit.

13. The method of claim 12 further comprising said pulse width modulation (PWM) boost power converter with an error amplifier, a feedback RC network, a feedback variable resistor element, a ramp oscillator, a PWM comparator, a Duty cycle control, a boost control network , a power stage , an inductor, a capacitor, auxiliary blocks, and a feedback signal line.

14. A method for providing improved electrical overstress tolerance using a PWM boost power converter with an electrical overstress (EOS) boost over-voltage comparator / switch network comprises the steps of:
- providing a pulse width modulation (PWM) boost power converter with an electrical overstress (EOS) boost over-voltage comparator / switch network comprising a boost power converter, a boost power converter feedback signal line, an error amplifier, a boost overvoltage comparator, a boost overvoltage comparator feedback network, and a boost overvoltage switch;
- defining an absolute maximum voltage condition;
- providing a voltage limit below the defined absolute maximum voltage condition;
- placing said boost overvoltage comparator and boost overvoltage switch on boost power converter feedback signal line between said boost power converter output signal and said error amplifier;
- optimizing the placement of said boost overvoltage comparator and boost overvoltage switch for electrical overstress (EOS) tolerance of said boost power converter; and,
- initiating turn-on of the boost overvoltage switch according to the voltage limit.
